# EUROPEAN PATENT APPLICATION

(11) **EP 4 429 104 A1**
(43) Date of publication of application: **11.09.2024**
(21) Application number: 24162481.6
(22) Date of filing: 08.03.2024
(51) Int. Cl.: H02S 40/44, F24S 10/75, H02S 20/22, H02S 20/23

(54) **INSTALLATION OF A HEAT EXCHANGER AND A PHOTOVOLTAIC PANEL**

(30) Priority: 10.03.2023 NL 2034318
(71) Applicant: Alius Beheer B.V., 5521 DX Eersel (NL); Escom B.V., 3905 KV Veenendaal (NL)
(72) Inventor: VAN DER MEIJDEN, Wilhelmus Hubertus, 5521 DX Eersel (NL); VAN VELZEN, Rene, 5521 DX Eersel (NL); VAN OSCH, Sander, 5521 DX Eersel (NL); KAMPHUIS, Gerrit Willem, 5521 DX Eersel (NL); DORLAND, Berend Albert Willem, 5521 DX Eersel (NL)
(74) Representative: V.O.

(57) **Abstract**

Method of installing a combination of a heat exchanger (2) and a photovoltaic panel (3) on a roof (4) or facade, comprising: mounting a support frame (5) to the roof or facade; installing a heat exchanger on the mounted support frame to be supported by the support frame, the heat exchanger comprising at least one coolant channel (6) and fins (7) attached to the coolant channel for exchanging heat between ambient air and coolant in the coolant channel; and after installing the heat exchanger on the mounted support frame, installing a photovoltaic panel on the mounted support frame to be supported by the support frame, such that the installed photovoltaic panel at least partly covers the installed heat exchanger. An interspace (8) is maintained between the installed photovoltaic panel and the installed heat exchanger to prevent fins of the heat exchanger from damaging the photovoltaic panel.

## Description

### FIELD

The invention relates to a method of installing a combination of a heat exchanger and a photovoltaic panel on a roof or facade, and further relates to a heat exchanger for use in the method, a kit of parts, and a support frame element.

### BACKGROUND

It is known to install a combination of a heat exchanger and a photovoltaic panel or a roof, in particular with the heat exchanger arranged between the photovoltaic panel and the roof. Such a combination allows energy harvesting from light incident on the photovoltaic panel as well as from environmental heat below the photovoltaic panel, using the heat exchanger. Such a heat exchanger is sometimes referred to as a collector, in the sense that it collects heat. Traditionally, a module comprising both the photovoltaic panel and the heat exchanger is produced off site for subsequent installation on the roof, allowing an installation method similar to that of photovoltaic panels without heat exchangers. A problem associated with this method has been found in that the module can be relatively heavy due to the combined mass of the photovoltaic panel and the heat exchanger, making it difficult to bring the module onto the roof and into position on the roof. Instead of on a roof, it is also known to install such a module on a facade, with essentially the same problem.

### SUMMARY

An object of the invention is to provide a method of installing a combination of a heat exchanger and a photovoltaic panel on a roof or facade that at least partly overcomes the abovementioned problem or an associated problem, or at least provides a useful alternative to the described traditional method.

Thereto, an aspect of the invention provides a method of installing a combination of a heat exchanger and a photovoltaic panel on a roof or facade. The method comprises: mounting a support frame to the roof or facade; installing a heat exchanger panel on the mounted support frame to be supported by the support frame, the heat exchanger panel comprising at least one coolant channel and fins attached to the coolant channel for exchanging heat between ambient air and coolant in the coolant channel; and after installing the heat exchanger panel on the mounted support frame, installing a photovoltaic panel on the mounted support frame to be supported by the support frame, such that the installed photovoltaic panel at least partly covers the installed heat exchanger panel. The installation of the combination of the heat exchanger panel and the photovoltaic panel causes the maintenance of an interspace between the installed photovoltaic panel and the installed heat exchanger panel to prevent fins of the heat exchanger covered by the photovoltaic panel from damaging a surface of the photovoltaic panel which surface faces the heat exchanger fins. It will be appreciated that the interspace at least is maintained between the fins of the heat exchanger and the surface of the photovoltaic panel facing the heat exchanger fins.

By installing the photovoltaic panel only after the heat exchanger panel has been installed, i.e. has been moved into its desired position on the roof or facade, the photovoltaic panel and the heat exchanger panel can be brought onto the roof or facade and into position on the roof or facade separately from each other, thereby overcoming the aforementioned problem of having to bring a relatively heavy combined module onto the roof or facade and into position on the roof or facade.

It is believed that, thus far, a prejudice existed in the field to the effect that the photovoltaic panel and heat exchanger had to be assembled together into a module off site in order to prevent that the photovoltaic panel would be damaged by the heat exchanger during or after installation. In particular, it was considered that fins of the heat exchanger would easily damage a glass surface of the photovoltaic panel, unless the two were carefully combined into a module before the installation. In this respect, the present invention is at least partly based on the new insight that such damage can in fact be prevented without requiring the aforementioned off site assembly, namely by causing the maintenance of an interspace between the installed photovoltaic panel and the installed heat exchanger panel by the actual installation itself. Optional ways of realizing such maintenance of an interspace are detailed below, along with further optional advantageous details of the installation. It is noted that the maintenance of such an interspace not only contributes to prevention of damage, but also advantageously promotes air flow between the photovoltaic panel and the heat exchanger, thereby promoting suitable air circulation around the fins of the heat exchanger for effective heat exchange with ambient air.

Optionally, the heat exchanger panel comprises spacers fixedly arranged with respect to the coolant channel and/or the fins, wherein the spacers maintain the interspace.

Optionally, the heat exchanger panel has an elongate shape defining a longitudinal axis, wherein the spacers are distributed along the longitudinal axis.

Optionally, the spacers are arranged on lateral edges of the heat exchanger panel.

Optionally, the spacers cooperate with longitudinal frame sections of the support frame extending along said lateral edges.

Optionally, the cooperation with the longitudinal frame sections of one or more of the spacers limits a position of the heat exchanger panel along and/or transverse to the longitudinal frame sections.

Optionally, the spacers are spaced apart from the support frame when the heat exchanger panel is installed on the support frame.

Optionally, the spacers extend laterally outwardly from a heat exchanger panel frame of the heat exchanger panel.

Optionally, when the photovoltaic panel is mounted on the support frame, a photovoltaic panel frame of the photovoltaic panel is supported by the heat exchanger panel frame such that an interspace is maintained between the heat exchanger fins and the surface of the photovoltaic panel facing the fins.

Optionally, the photovoltaic panel frame of the photovoltaic panel abuts against the spacers when the photovoltaic panel is mounted on the support frame. The photovoltaic panel frame can be supported by spacers. Hence, the interspace between the photovoltaic panel glass and the heat exchanger fins can be maintained, also when the photovoltaic panel bends, e.g. due to snow load.

Optionally, surfaces of the spacers facing away from the roof define a plane for supporting the photovoltaic panel frame, such that a predefined distance is maintained between the fins and the surface of the photovoltaic panel facing the fins.

Optionally, the predefined distance is at least 0.5 mm, preferably the predefined distance is at most 5 mm.

Optionally, the roof is a flat roof.

Optionally, the roof is a pitched roof.

Optionally, the installed photovoltaic panel fully covers the installed heat exchanger panel, at least the fins thereof, and/or the installed photovoltaic panel extends beyond one or more outer edges of the installed heat exchanger panel.

Optionally, for one or more frame sections of the support frame, the respective frame section directly supports both the installed heat exchanger panel and the installed photovoltaic panel, each at a different level from an outward facing surface of the roof, thereby contributing to the maintenance of the interspace therebetween.

Optionally, the one or more frame sections extend horizontally. Hence, the frame sections support lower and upper edges of the photovoltaic panel and the heat exchanger panel.

Optionally, the one or more frame sections extend transversely with respect to the longitudinal axis, in particular extending along and/or cooperating with one or more transverse edges of the heat exchanger panel and/or the photovoltaic panel.

A further aspect provides a heat exchanger panel for use as the heat exchanger panel in the described method, preferably wherein the heat exchanger panel comprises spacers fixedly arranged with respect to the coolant channel and/or the fins, wherein the spacers are configured to maintain the interspace.

Optionally, a passage is formed through the heat exchanger panel to allow electronics and/or cabling for the photovoltaic panel to extend therethrough from the photovoltaic panel covering the heat exchanger panel to below the heat exchanger panel, wherein preferably the passage is free from the fins. Such a passage may additionally further promote air flow between the heat exchanger panel and the photovoltaic panel and thereby air circulation at the fins.

Optionally, the heat exchanger panel is formed substantially rotation symmetrically with respect to a 180 degree rotation about an axis extending normal to a plane along which the heat exchanger mainly extends.

Optionally, the heat exchanger panel comprises at least two heat exchanger sections each comprising respective ones of the fins, in particular without any of the fins extending in multiple ones of the sections, wherein a same coolant channel extends through the different heat exchanger sections.

Optionally, the heat exchanger panel comprises spacers fixedly arranged with respect to the coolant channel and/or the fins, wherein the spacers maintain the interspace.

Optionally, the heat exchanger panel has an elongate shape defining a longitudinal axis, wherein the spacers are distributed along the longitudinal axis.

Optionally, the spacers are arranged on lateral edges of the heat exchanger panel. Optionally, the spacers are configured to cooperate with longitudinal frame sections of the support frame extending along said lateral edges. Optionally, the spacers are configured to limit a position of the heat exchanger panel along and/or transverse to the longitudinal frame sections.

Optionally, the spacers extend laterally outwardly from a heat exchanger panel frame of the heat exchanger panel. Optionally, surfaces of the spacers facing away from the roof define a plane for supporting the photovoltaic panel frame, such that a predefined distance is maintained between the fins and the surface of the photovoltaic panel facing the fins.

The heat exchanger panel comprises the fins. Optionally, a height of the fins, measured in a thickness direction of the heat exchanger panel, relates to a spacing between two adjacent fins. Preferably, the height is at least 2.5 times the spacing. Preferably the height is at most 7 times the spacing. In an example, the height is about 50 mm and the distance is about 12 mm.

A further aspect provides a kit of parts for the installation of the combination of the heat exchanger panel and the photovoltaic panel, the kit comprising, separately from each other in the kit: the heat exchanger panel, the photovoltaic panel, and the support frame or parts for forming the support frame.

A further aspect provides a support frame element for use as a frame section of the support frame in the described method.

Optionally, the support frame element is configured for use as one of the longitudinal frame sections mentioned above.

Optionally, the support frame element is configured for use as one of the transverse frame sections mentioned above.

A further aspect provides a support frame element, for example as described above, for supporting, and preferably retaining, respective transverse, e.g. bottom or top, edges of a heat exchanger panel and a separate photovoltaic panel on a roof or facade, such that the photovoltaic panel covers the heat exchanger panel while remaining at a distance from fins of the heat exchanger panel.

Optionally, the support frame element is configured for supporting bottom edges of one set of a heat exchanger panel and a photovoltaic panel and top edges of a further set of a heat exchanger panel and a photovoltaic panel, the further set being arranged at an opposite side of the support frame element from the one set.

Optionally, the support frame element is formed as an elongate profiled element having a transverse profile with lateral wings arranged at different levels to receive respective ones of the edges of the heat exchanger panel and the photovoltaic panel.

Optionally, the transverse profile has connecting portions between proximal ends of the wings as part of a profile core from which the wings extend.

Optionally, the transverse profile allows the photovoltaic panel to extend beyond the heat exchanger panel at the support frame element.

A support frame element can be formed as an elongate profiled element having a transverse profile, the transverse profile including: at a first level a first lateral wing and a second lateral wing substantially extending in the same plane and arranged for supporting a lower side of heat exchanger panels; at a second level, positioned above the first level, a third lateral wing and a fourth lateral wing substantially extending in the same plane and arranged for supporting a lower side of photovoltaic panels, the third and fourth lateral wings also arranged for preventing an upper side of the heat exchanger panels from escaping upwardly from the transverse profile; and at a third level, positioned above the second level, a fifth lateral wing and a sixth lateral substantially extending in the same plane and arranged for preventing an upper side of the photovoltaic panels from escaping upwardly from the transverse profile.

Optionally, the fourth wing, measured from below, is longer than the second wing so as to allow the heat exchanger panel to be lowered onto the second wing, and the third wing having a length that allows the heat exchanger panel, once lowered onto the second wing and slid downwards on the second wing, to be prevented from upwardly passing the third wing.

Optionally, the sixth wing is longer than the fourth wing, measured from above, so as to allow the photovoltaic panel to be lowered onto the fourth wing, and the fifth wing having a length that allows the photovoltaic panel, once lowered onto the fourth wing and slid downwards on the fourth wing, to be prevented from upwardly passing the fifth wing.

It shall be appreciated that options described herein in the context of one aspect may be correspondingly applied to other aspects described herein. For example, features described as related to the method may be correspondingly applied to the heat exchanger, the kit of parts and/or the support frame element, and vice versa. Advantages of the various options described herein will be readily understood by the skilled person having the benefit of the present disclosure, in particular with reference to the following detailed description.

### DETAILED DESCRIPTION

In the following, the invention will be explained further using non-limiting examples of embodiments and drawings. The drawings are schematic and merely show non-limiting examples. In the drawings, corresponding elements have been indicated by corresponding reference signs. In the drawings:
Fig. 1 shows a partly transparent perspective view of an installed combination of a heat exchanger panel and a photovoltaic panel;
Fig. 2 shows a partly transparent perspective view of an installed combination of a heat exchanger panel and a photovoltaic panel;
Fig. 3 shows a cross sectional view of a portion of an installed combination of a heat exchanger panel and a photovoltaic panel, including a longitudinal frame section of the support frame, corresponding to Fig. 2;
Fig. 4 shows a cross sectional view of a portion of an installed combination of a heat exchanger panel and a photovoltaic panel, including a transverse frame section of the support frame, corresponding to Fig. 1;
Fig. 5 shows a perspective view corresponding to detail A of Fig. 2; and
Fig. 6 shows a perspective view corresponding to detail B of Fig. 2.

The figures illustrate examples of a method of installing a combination 1 of a heat exchanger panel 2 and a photovoltaic panel 3 on a roof 4 or facade. The method comprises: mounting a support frame 5 to the roof 4 or facade; installing a heat exchanger panel 2 on the mounted support frame 5 to be supported by the support frame 5, the heat exchanger panel 2 comprising at least one coolant channel 6 and fins 7 attached to the coolant channel 6 for exchanging heat between ambient air and coolant in the coolant channel 6; and after installing the heat exchanger panel 2 on the mounted support frame 5, installing a photovoltaic panel 3 on the mounted support frame 5 to be supported by the support frame 5, such that the installed photovoltaic panel 3 at least partly covers the installed heat exchanger panel 2.

The installation of the combination 1 of the heat exchanger panel 2 and the photovoltaic panel 3 causes the maintenance of an interspace 8 between the installed photovoltaic panel 3 and the installed heat exchanger panel 2 to prevent fins 7 of the heat exchanger panel 2 covered by the photovoltaic panel 3 from damaging a surface 9 of the photovoltaic panel 3 which surface 9 faces the heat exchanger 2. The interspace 8 is maintained at least between the fins 7 of the heat exchanger panel 2 and the surface 9 of the photovoltaic panel 3 facing the heat exchanger panel 2. As detailed further below, other parts of the photovoltaic panel 3 may touch the heat exchanger panel 2.

The combination 1 may be installed from a kit of parts comprising, separately from each other in the kit: the heat exchanger panel, the photovoltaic panel, and the support frame or parts for forming the support frame.

In the shown examples, the heat exchanger panel 2 comprises spacers 10 fixedly arranged with respect to the coolant channel 6 and/or the fins 7. The spacers 10 can aid in maintaining the interspace 8.

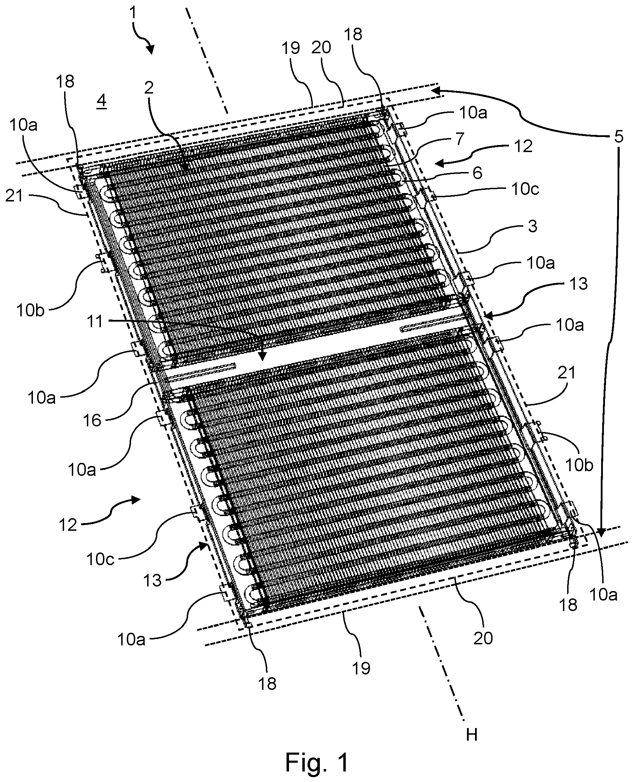

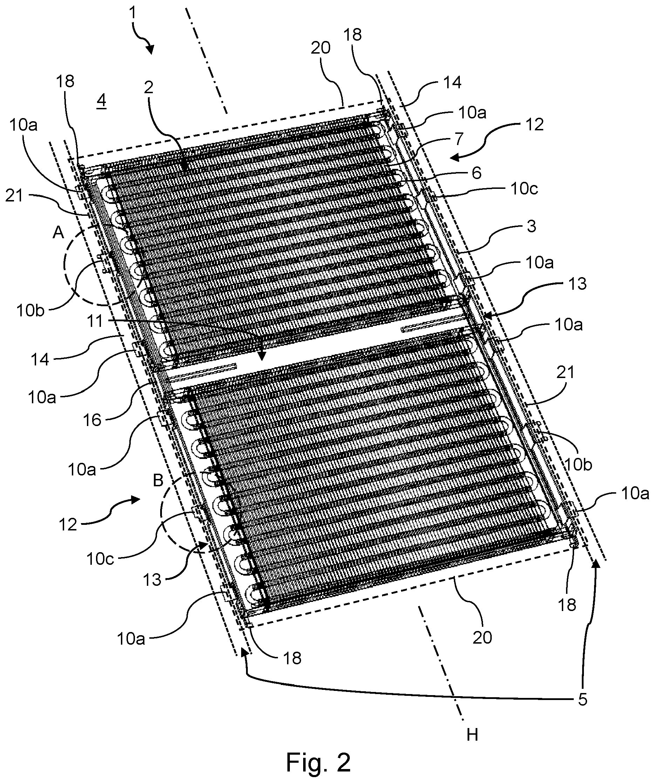

In the examples of Figs. 1 and 2, a passage 11 is formed through the heat exchanger panel 2 to allow electronics and/or cabling (not shown) for the photovoltaic panel 3 to extend therethrough from the photovoltaic panel 3 covering the heat exchanger panel 2 to below the heat exchanger panel 2, wherein the passage 11 is free from the fins 7.

In the examples of Fig. 1 and 2, the heat exchanger panel 2 is formed substantially rotation symmetrically with respect to a 180 degree rotation about an axis extending normal to a plane along which the heat exchanger panel 2 mainly extends.

In the examples of Fig. 1 and 2, the heat exchanger panel 2 comprises at least two heat exchanger sections 12 each comprising respective ones of the fins 7, in particular without any of the fins 7 extending in multiple ones of the sections 12, wherein a same coolant channel 6 extends through the different heat exchanger sections 12. The coolant may be fed through the multiple sections in parallel and/or in series.

In the shown examples, the heat exchanger panel 2 has an elongate shape defining a longitudinal axis H, wherein the spacers are distributed along the longitudinal axis H.

In the shown examples, the spacers 10 are arranged on lateral edges 13 of the heat exchanger 2.

In the example of Fig. 2, the spacers 10 cooperate with longitudinal frame sections 14 of the support frame 5 extending along said lateral edges 13. The example of Fig. 2 is particularly suitable for a flat roof.

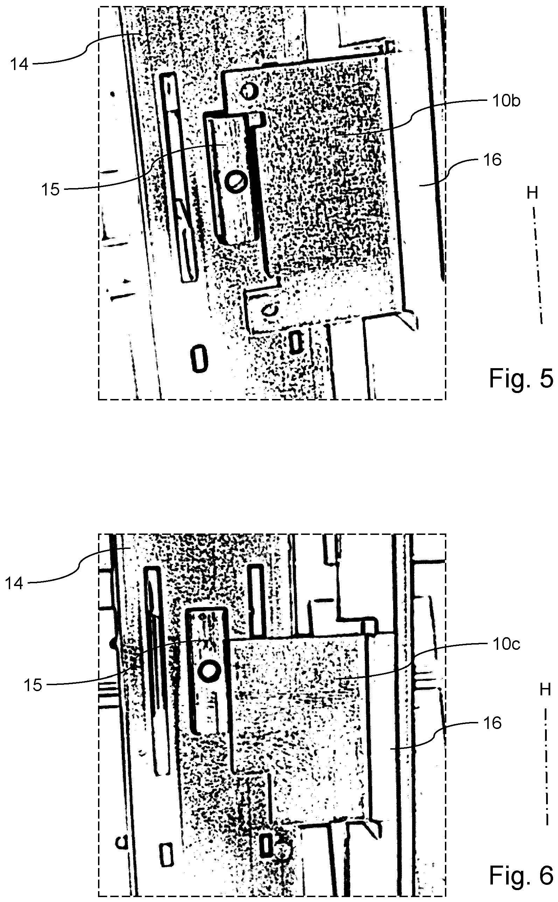

In the example of Fig. 2, with particular reference to the details shown in Figs. 5 and 6, the cooperation of one or more of the spacers 10 with the longitudinal frame sections 14 limits a position of the heat exchanger panel 2 along and/or transverse to the longitudinal frame sections 14. In Fig. 2, three types of spacers 10 are shown, indicated as 10a, 10b and 10c, respectively.

Spacer type 10b is shown in more detail in Fig. 5, where it can be seen that there the cooperation of the spacer 10b with the longitudinal frame section 14, in particular with a protrusion 15 thereof, limits a position of the heat exchanger panel 2 along the longitudinal frame section 14, i.e. parallel to the longitudinal axis H of the heat exchanger panel 2.

Spacer type 10c is shown in more detail in Fig. 6, where it can be seen that there the cooperation of the spacer 10c with the longitudinal frame section, in particular with a protrusion 15 thereof, limits a position of the heat exchanger panel 2 transverse to the longitudinal frame section 14, i.e. transverse to the longitudinal axis H of the heat exchanger panel 2.

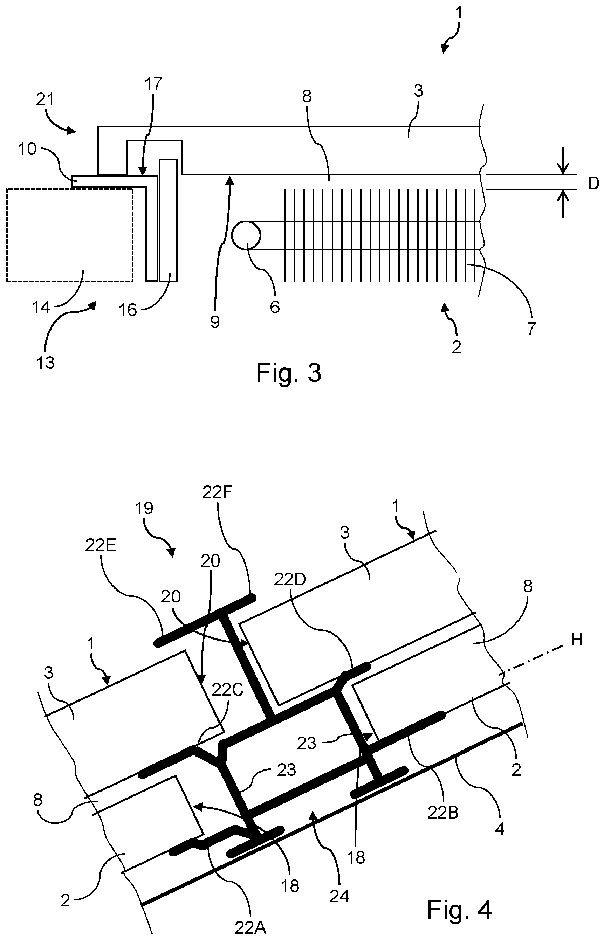

In the example of Fig. 1, the spacers 10 are spaced apart from the support frame 5 when the heat exchanger 2 is installed on the support frame 5. The example of Fig. 1 is particularly suitable for a pitched roof, see also Fig. 4.

In the shown examples, the spacers 10 extend laterally outwardly from a heat exchanger frame 16 of the heat exchanger panel 2.

In the shown examples, with particular reference to Fig. 3, surfaces of the spacers 10, in particular top surfaces 17, facing away from the roof 4 support the photovoltaic panel 3, particularly an outer edge 21 thereof, such as a photovoltaic panel frame. Here, the spacers 10 support the photovoltaic panel such that a predefined distance D is maintained between the fins 7 and the surface 9 of the photovoltaic panel 3 facing the fins 7 Said predefined distance D preferably corresponds to, at least contributes to, the interspace 8 between the installed photovoltaic panel 3 and the installed heat exchanger panel 2.

The predefined distance D is preferably at least 0.5 mm and preferably at most 5 mm.

In the shown examples, the installed photovoltaic panel 3 fully covers the installed heat exchanger panel 2, at least the fins 7 thereof, and the installed photovoltaic panel 3 extends beyond one or more outer edges 13, 18, 19 of the installed heat exchanger panel 2. Preferably, the installed photovoltaic panel 2 extends beyond all outer edges of the installed heat exchanger panel 3.

In the examples of Fig. 1 and 4, for one or more frame sections 19 of the support frame 5, the respective frame section 19 directly supports both the installed heat exchanger panel 2 and the installed photovoltaic panel 3, each at a different level from an outward facing surface of the roof 4, thereby contributing to the maintenance of the interspace 8 therebetween.

With continued reference to Figs. 1 and 4, the one or more frame sections 19 here extend transversely with respect to the longitudinal axis H, in particular extending along and/or cooperating with one or more transverse edges 18 of the heat exchanger panel 2 and/or the photovoltaic panel 3.

The figures thus also show various examples of a support frame element, in particular for use as a frame section 14, 19 of the support frame 5 in the described method.

With reference to Figs. 2 and 3, the support frame element may be configured for use as one of the aforementioned longitudinal frame sections 14.

With reference to Figs. 1 and 4, the support frame element may be configured for use as one of the aforementioned transverse frame sections 19.

With continued reference to Figs. 1 and 4, the support frame element 19 is here arranged for supporting, and preferably retaining, respective transverse, e.g. bottom or top, edges 18, 20 of a heat exchanger panel 2 and a separate photovoltaic panel 3 on a roof 4 or facade, such that the photovoltaic panel 3 covers the heat exchanger panel 2 while remaining at a distance from fins 7 of the heat exchanger 2.

With particular reference to Fig. 4, the support frame element 19 is here configured for supporting bottom edges 18, 20 (on the right hand side in Fig. 4) of one set of a heat exchanger panel 2 and a photovoltaic panel 3 and top edges 18, 20 (on the left hand side in Fig. 4) of a further set of a heat exchanger panel 2 and a photovoltaic panel 3, the further set being arranged at an opposite side of the support frame element 19 from the one set.

With continued reference to Figs. 1 and 4, the support frame element 19 is here formed as an elongate profiled element having a transverse profile with lateral wings 22 arranged at different levels to receive respective ones of the edges 18, 20 of the heat exchanger panel 2 and the photovoltaic panel 3.

With reference to Fig. 4, the transverse profile here has connecting portions 23 between proximal ends of the wings 22 as part of a profile core 24 from which the wings 22 extend.

In this example, the transverse profile includes at a first level a first lateral wing 22A and a second lateral wing 22B. The first and second lateral wings 22A, 22B substantially extend in the same plane and are arranged for supporting a lower side of the heat exchanger panels 3. The transverse profile includes at a second level, positioned above the first level, a third lateral wing 22C and a fourth lateral wing 22D. The third and fourth lateral wings 22C, 22D substantially extend in the same plane and are arranged for supporting a lower side of the photovoltaic panels 3. The third and fourth lateral wings 22C, 22D are also arranged for preventing an upper side of the heat exchanger panels 3 from escaping upwardly from the transverse profile. The transverse profile includes at a third level, positioned above the second level, a fifth lateral wing 22E and a sixth lateral wing 22F. The fifth and sixth lateral wings 22E, 22F substantially extend in the same plane and are arranged for preventing an upper side of the photovoltaic panels 2 from escaping upwardly from the transverse profile. Here. The fourth wing 22D, measured from below, is longer than the second wing 22B so as to allow the heat exchanger panel 2 to be lowered onto the second wing 22B. The third wing 22C in this example has a length that allows the heat exchanger panel 2, once lowered onto the second wing 22B and slid downwards on the second wing 22B, to be prevented from upwardly passing the third wing 22C. The sixth wing 22F is longer than the fourth wing 22D, measured from above, so as to allow the photovoltaic panel 3 to be lowered onto the fourth wing 22D. The fifth wing 22E in this example has a length that allows the photovoltaic panel 3, once lowered onto the fourth wing 22D and slid downwards on the fourth wing 22D, to be prevented from upwardly passing the fifth wing 22E. Hence, easy mounting of the heat exchanger panel 2 and the photovoltaic panel 3 is obtained. In this example, the profile core 24 is wider between two adjacent heat exchanger panels 2 than between two adjacent photovoltaic panels 2, so as to account for the photovoltaic panels 3 having a longer length than the heat exchanger panels 2.

With reference to Figs. 1 and 4, the transverse profile here allows the photovoltaic panel 3 to extend beyond the heat exchanger 2 at the support frame element 19.

### EMBODIMENTS

The disclosure will now further describe the following numbered embodiments. It will be appreciated that some or all of the embodiments summarize aspects of the disclosure as provided in the detailed description and the figures. Accordingly, the embodiments are also to be read in connection with the preceding paragraphs and the appended figures, and do not limit the disclosure. The features and preferences as described hereinabove apply also to the following embodiments.

Embodiment 1: Method of installing a combination of a heat exchanger and a photovoltaic panel on a roof or facade, comprising:
- mounting a support frame to the roof or facade;
- installing a heat exchanger panel on the mounted support frame to be supported by the support frame, the heat exchanger panel comprising at least one coolant channel and fins attached to the coolant channel for exchanging heat between ambient air and coolant in the coolant channel; and
- after installing the heat exchanger panel on the mounted support frame, installing a photovoltaic panel on the mounted support frame to be supported by the support frame, such that the installed photovoltaic panel at least partly covers the installed heat exchanger panel,
wherein the installation of the combination of the heat exchanger panel and the photovoltaic panel causes the maintenance of an interspace between the fins of the installed heat exchanger panel and a surface of the installed photovoltaic panel facing the fins to prevent fins of the heat exchanger panel covered by the photovoltaic panel from damaging the surface of the photovoltaic panel which surface faces the heat exchanger panel fins.

Embodiment 2: Method according to embodiment 1, wherein the heat exchanger panel comprises spacers fixedly arranged with respect to the coolant channel and/or the fins, wherein the spacers maintain the interspace.

Embodiment 3: Method according to embodiment 2, wherein the heat exchanger panel has an elongate shape defining a longitudinal axis, wherein the spacers are distributed along the longitudinal axis.

Embodiment 4: Method according to embodiment 3, wherein the spacers are arranged on lateral edges of the heat exchanger panel.

Embodiment 5: Method according to embodiment 4, wherein the spacers cooperate with longitudinal frame sections of the support frame extending along said lateral edges.

Embodiment 6: Method according to embodiment 5, wherein the cooperation with the longitudinal frame sections of one or more of the spacers limits a position of the heat exchanger panel along and/or transverse to the longitudinal frame sections.

Embodiment 7: Method according to any of embodiments 2-4, wherein the spacers are spaced apart from the support frame when the heat exchanger panel is installed on the support frame.

Embodiment 8: Method according to any of embodiments 2-7, wherein, when the photovoltaic panel is mounted on the support frame, a photovoltaic panel frame of the photovoltaic panel is supported by the heat exchanger panel frame such that the interspace is maintained between the heat exchanger fins and the surface of the photovoltaic panel facing the fins.

Embodiment 9: Method according to any of embodiments 2-8, wherein the spacers extend laterally outwardly from a heat exchanger panel frame of the heat exchanger panel.

Embodiment 10: Method according to embodiment 9, wherein the photovoltaic panel frame of the photovoltaic panel abuts against the spacers when the photovoltaic panel is mounted on the support frame.

Embodiment 11: Method according to embodiment 10, wherein surfaces of the spacers facing away from the roof define a plane for supporting the photovoltaic panel frame, such that a predefined distance is maintained between the fins and the surface of the photovoltaic panel facing the fins.

Embodiment 12: Method according to embodiment 11, wherein the predefined distance is at least 0.5 mm, preferably wherein the predefined distance is at most 5 mm.

Embodiment 13: Method according to any of embodiments 1-12, wherein the roof is a flat roof.

Embodiment 14: Method according to any of embodiments 1 - 12, wherein the roof is a pitched roof.

Embodiment 15: Method according to any of the preceding embodiments, wherein the installed photovoltaic panel fully covers the installed heat exchanger panel, at least the fins thereof, and/or the installed photovoltaic panel extends beyond one or more outer edges of the installed heat exchanger panel.

Embodiment 16: Method according to any of the preceding embodiments, wherein for one or more frame sections of the support frame, the respective frame section directly supports both the installed heat exchanger panel and the installed photovoltaic panel, each at a different level from an outward facing surface of the roof, thereby contributing to the maintenance of the interspace therebetween.

Embodiment 17: Method according to embodiment 16, as directly or indirectly dependent from embodiment 3, wherein the one or more frame sections of embodiment 16 extend transversely with respect to the longitudinal axis, in particular extending along and/or cooperating with one or more transverse edges of the heat exchanger panel and/or the photovoltaic panel.

Embodiment 18: Heat exchanger panel for use as the heat exchanger panel in a method according to any of the preceding embodiments, in particular according to embodiment 2 or any embodiment dependent from embodiment 2.

Embodiment 19: Heat exchanger panel according to embodiment 18, wherein a passage is formed through the heat exchanger panel to allow electronics and/or cabling for the photovoltaic panel to extend therethrough from the photovoltaic panel covering the heat exchanger panel to below the heat exchanger panel, wherein preferably the passage is free from the fins.

Embodiment 20: Heat exchanger panel according to embodiment 18 or 19, formed substantially rotation symmetrically with respect to a 180 degree rotation about an axis extending normal to a plane along which the heat exchanger panel mainly extends.

Embodiment 21: Heat exchanger panel according to embodiment 18, 19 or 20, comprising at least two heat exchanger sections each comprising respective ones of the fins, in particular without any of the fins extending in multiple ones of the sections, wherein a same coolant channel extends through the different heat exchanger sections.

Embodiment 22: Heat exchanger panel, for example according to any of embodiments 18-21, comprising a plurality of fins mounted to one or more coolant channels, wherein a height of the fins, measured in a thickness direction of the heat exchanger panel, relates to a spacing between two adjacent fins such that the height is at least 2.5 times the spacing, preferably the height is at most seven times the spacing.

Embodiment 23: Kit of parts for an installation of a combination of a heat exchanger panel and a photovoltaic panel according to any of embodiments 1 - 17, the kit comprising, separately from each other in the kit: the heat exchanger panel, the photovoltaic panel, and the support frame or parts for forming the support frame.

Embodiment 24: Support frame element for use as a frame section of the support frame in a method according to any of embodiments 1 - 17.

Embodiment 25: Support frame element according to embodiment 24, configured for use as one of the longitudinal frame sections mentioned in embodiment 5.

Embodiment 26: Support frame element according to embodiment 24 or 25, configured for use as one of the transverse frame sections mentioned in embodiment 17.

Embodiment 27: Support frame element, for example according to any of embodiments 24 - 26, for supporting, and preferably retaining, respective transverse, e.g. bottom or top, edges of a heat exchanger panel and a separate photovoltaic panel on a roof or facade, such that the photovoltaic panel covers the heat exchanger panel while remaining at a distance from fins of the heat exchanger.

Embodiment 28: Support frame element according to embodiment 27, configured for supporting bottom edges of one set of a heat exchanger panel and a photovoltaic panel and top edges of a further set of a heat exchanger panel and a photovoltaic panel, the further set being arranged at an opposite side of the support frame element from the one set.

Embodiment 29: Support frame element according to embodiment 27 or 28, formed as an elongate profiled element having a transverse profile with lateral wings arranged at different levels to receive respective ones of the edges of the heat exchanger panel and the photovoltaic panel.

Embodiment 30: Support frame element according to embodiment 29, wherein the transverse profile has connecting portions between proximal ends of the wings as part of a profile core from which the wings extend.

Embodiment 31: Support frame element according to embodiment 29 or 30, wherein the transverse profile allows the photovoltaic panel to extend beyond the heat exchanger panel at the support frame element.

Embodiment 32: Support frame element, for example according to any of embodiments 24 - 31, formed as an elongate profiled element having a transverse profile, the transverse profile including:
at a first level a first lateral wing and a second lateral wing substantially extending in the same plane and arranged for supporting a lower side of heat exchanger panels;
at a second level, positioned above the first level, a third lateral wing and a fourth lateral wing substantially extending in the same plane and arranged for supporting a lower side of photovoltaic panels, the third and fourth lateral wings also arranged for preventing an upper side of the heat exchanger panels from escaping upwardly from the transverse profile; and
at a third level, positioned above the second level, a fifth lateral wing and a sixth lateral substantially extending in the same plane and arranged for preventing an upper side of the photovoltaic panels from escaping upwardly from the transverse profile.

Embodiment 33: Support frame element according to embodiment 32, wherein the fourth wing, measured from below, is longer than the second wing so as to allow the heat exchanger panel to be lowered onto the second wing, and the third wing having a length that allows the heat exchanger panel, once lowered onto the second wing and slid downwards on the second wing, to be prevented from upwardly passing the third wing.

Embodiment 34: Support frame element according to embodiment 32 or 33, wherein the sixth wing is longer than the fourth wing, measured from above, so as to allow the photovoltaic panel to be lowered onto the fourth wing, and the fifth wing having a length that allows the photovoltaic panel, once lowered onto the fourth wing and slid downwards on the fourth wing, to be prevented from upwardly passing the fifth wing.

Although the invention has been explained further herein with reference to examples of embodiments and drawings, these do not limit the scope of the invention as defined by the claims. Many variants are possible, as will be appreciated by the skilled person having the benefit of the present disclosure. All such variants are included in the scope of the invention as defined by the appended claims.

### LIST OF REFERENCE SIGNS

- 1.: Combination of heat exchanger and photovoltaic panel
- 2.: Heat exchanger
- 3.: Photovoltaic panel
- 4.: Roof
- 5.: Support frame
- 6.: Coolant channel
- 7.: Fins
- 8.: Interspace
- 9.: Surface of photovoltaic panel facing the heat exchanger
- 10.: Spacer (also: 10a, 10b, 10c)
- 11.: Passage
- 12.: Heat exchanger section
- 13.: Lateral edge of heat exchanger
- 14.: Longitudinal frame section of support frame
- 15.: Protrusion of longitudinal frame section
- 16.: Heat exchanger frame of heat exchanger
- 17.: Top surface of spacer
- 18.: Transverse edge of heat exchanger
- 19.: Transverse frame section of support frame
- 20.: Transverse edge of photovoltaic panel
- 21.: Lateral edge of photovoltaic panel
- 22.: Wing
- 23.: Connecting portion
- 24.: Profile core
- D.: Predefined distance between fins and the surface of the photovoltaic panel 3 facing the fins
- H.: Longitudinal axis of heat exchanger

## Claims

1. Method of installing a combination of a heat exchanger and a photovoltaic panel on a roof or facade, comprising:
- mounting a support frame to the roof or facade;
- installing a heat exchanger panel on the mounted support frame to be supported by the support frame, the heat exchanger panel comprising at least one coolant channel and fins attached to the coolant channel for exchanging heat between ambient air and coolant in the coolant channel; and
- after installing the heat exchanger panel on the mounted support frame, installing a photovoltaic panel on the mounted support frame to be supported by the support frame, such that the installed photovoltaic panel at least partly covers the installed heat exchanger panel,
wherein the installation of the combination of the heat exchanger panel and the photovoltaic panel causes the maintenance of an interspace between the fins of the installed heat exchanger panel and a surface of the installed photovoltaic panel facing the fins to prevent fins of the heat exchanger panel covered by the photovoltaic panel from damaging the surface of the photovoltaic panel which surface faces the heat exchanger panel fins.

2. Method according to claim 1, wherein the heat exchanger panel comprises spacers fixedly arranged with respect to the coolant channel and/or the fins, wherein the spacers maintain the interspace, wherein optionally the heat exchanger panel has an elongate shape defining a longitudinal axis, wherein the spacers are distributed along the longitudinal axis.

3. Method according to claim 2, wherein the spacers are arranged on lateral edges of the heat exchanger panel.

4. Method according to claim 3, wherein the spacers cooperate with longitudinal frame sections of the support frame extending along said lateral edges, wherein optionally the cooperation with the longitudinal frame sections of one or more of the spacers limits a position of the heat exchanger panel along and/or transverse to the longitudinal frame sections.

5. Method according to any of claims 2-4, wherein the spacers are spaced apart from the support frame when the heat exchanger panel is installed on the support frame.

6. Method according to any of claims 2-5, wherein, when the photovoltaic panel is mounted on the support frame, a photovoltaic panel frame of the photovoltaic panel is supported by the heat exchanger panel frame such that the interspace is maintained between the heat exchanger fins and the surface of the photovoltaic panel facing the fins.

7. Method according to any of claims 2-6, wherein the spacers extend laterally outwardly from a heat exchanger panel frame of the heat exchanger panel.

8. Method according to claim 7, wherein the photovoltaic panel frame of the photovoltaic panel abuts against the spacers when the photovoltaic panel is mounted on the support frame.

9. Method according to claim 8, wherein surfaces of the spacers facing away from the roof define a plane for supporting the photovoltaic panel frame, such that a predefined distance is maintained between the fins and the surface of the photovoltaic panel facing the fins, wherein, optionally, the predefined distance is at least 0.5 mm, preferably wherein the predefined distance is at most 5 mm.

10. Method according to any of claims 1-9, wherein the roof is a flat roof, or wherein the roof is a pitched roof.

11. Method according to any of the preceding claims, wherein the installed photovoltaic panel fully covers the installed heat exchanger panel, at least the fins thereof, and/or the installed photovoltaic panel extends beyond one or more outer edges of the installed heat exchanger panel.

12. Method according to any of the preceding claims, wherein for one or more frame sections of the support frame, the respective frame section directly supports both the installed heat exchanger panel and the installed photovoltaic panel, each at a different level from an outward facing surface of the roof, thereby contributing to the maintenance of the interspace therebetween.

13. Method according to claim 12, as directly or indirectly dependent from claim 2, wherein the one or more frame sections of claim 12 extend transversely with respect to the longitudinal axis, in particular extending along and/or cooperating with one or more transverse edges of the heat exchanger panel and/or the photovoltaic panel.

14. Heat exchanger panel for use as the heat exchanger panel in a method according to any of the preceding claims, in particular according to claim 2 or any claim dependent from claim 2.

15. Support frame element for supporting, and preferably retaining, respective transverse, e.g. bottom or top, edges of a heat exchanger panel and a separate photovoltaic panel on a roof or facade, such that the photovoltaic panel covers the heat exchanger panel while remaining at a distance from fins of the heat exchanger.
